# EUROPEAN PATENT APPLICATION

(11) **EP 4 660 005 A1**
(43) Date of publication of application: **10.12.2025**
(21) Application number: 25179049.9
(22) Date of filing: 27.05.2025
(51) Int. Cl.: B60N 2/28

(54) **CHILD CARRIER HAVING RETRACTABLE SHIELDING STRUCTURE AND AUXILIARY HEADREST ACCESSORY**

(30) Priority: 06.06.2024 US 202463656931 P
(71) Applicant: Wonderland Switzerland AG, 6312 Steinhausen (CH)
(72) Inventor: YEH, I Ping, 6312 Steinhausen (CH); CHENG, YU-HSUAN, 6312 Steinhausen (CH); CHUNG, CHU-HUA, 6312 Steinhausen (CH)
(74) Representative: ERNICKE Patent- und Rechtsanwälte PartmbB

(57) **Abstract**

The present disclosure proposes a child carrier (100, 300, 400, 900) having a retractable shielding structure (132), which may provide a shielding function for the child carrier (100, 300, 400, 900) without need for additional hardware or accessories, to shield external light for a child or toddler ride therein and enhance user experience; at the same time, the shielding structure (132) may be integrated with the child carrier (100, 300, 400, 900) when not in use, facilitating storage; moreover, the material of the shielding structure (132) may also provide a comfortable feeling for the child or toddler riding in the child carrier (100, 300, 400, 900). The present disclosure also provides an auxiliary headrest (2, 7, 8, 9) that is compatible with various types of child carriers (100, 300, 400, 900) and may further provide stable support and safety for the child or toddler.

## Description

### TECHNICAL FIELD

The present disclosure relates to a child carrier and an auxiliary headrest accessory and, more particularly, to a child carrier having a retractable shielding structure and an auxiliary headrest accessory.

### BACKGROUND

In a child carrier such as a baby stroller, a child car seat, or a baby basket, a canopy is usually installed to partially shield a child or an infant in a carrier space (e.g., from sunlight or ambient light). However, existing products often use an additional rigid structure to connect with the canopy, which not only adds extra weight to make the child carrier bulkier, but also requires more space due to a large size of the canopy.

In addition, in existing child carriers, a headrest is designed too large for the head of the infant and young child, so that the head and neck of the infant and the young child may shake due to vibration or impact when the child carrier is moving, thereby affecting comfort and safety of the child in the child carrier.

### SUMMARY

The present disclosure aims to provide a child carrier having a retractable shielding structure (also called shielding piece) that may provide partial shielding (e.g., from sunlight or ambient light) for a child or an infant in a carrier space and may facilitate storage.

Based on a concept of the present disclosure, there is provided a child carrier including a seating part, a backrest part connected to the seating part, and a headrest part disposed in the backrest part. The headrest part includes a headrest body and a shielding piece, the headrest body having an accommodation space, and the shielding piece being connected to a portion of an upper edge of the headrest body, to at least partially shield the headrest part in a deployed state, and to be accommodated in the accommodation space of the headrest part in a retracted state. The shielding piece preferentially is composed of a filler material and a fabric material, and the fabric material covers the filler material.

According to the above concept, the filler material may include a stacked multi-layer structure.

According to the above concept, the headrest body may have a headrest portion and opposite two lateral portions, the two lateral portions preferentially being connected to the headrest portion and jointly defining the accommodation space. Each lateral portion may have an arcuate side edge connected to the upper edge of the headrest body. In particular the upper edge of the headrest body may have a linear segment connected to the arcuate side edge. The shielding piece may be connected to the linear segment.

According to the above concept, the child carrier may include an auxiliary headrest detachably provided to the headrest body. The auxiliary headrest includes a headrest bottom and a peripheral wall portion surrounding the headrest bottom, to jointly define an auxiliary accommodation space. The peripheral wall portion may be formed by folding a soft sheet. The soft sheet may have an upper arcuate edge and a lower arcuate edge that face away from each other, and preferentially opposite connecting side edges connected between the upper arcuate edge and the lower arcuate edge; Preferentially, in a folded state of the soft sheet, the upper arcuate edge and the lower arcuate edge may overlap with each other, and the peripheral wall portion may be connected to the headrest bottom, in particular through the upper arcuate edge and the lower arcuate edge that may be overlapping with each other.

Based on a concept of the present disclosure, there is provided a baby basket, including a basket body and a seat cushion assembly accommodated in the basket body. The baby basket includes a shielding piece connected to a portion of a peripheral edge of the basket body. the shielding piece may be composed of a filler material and a fabric material. The shielding piece in a retracted state may be accommodated in the basket body.

According to the above concept, the filler material may include a stacked multi-layer structure.

According to the above concept, the baby basket may include an auxiliary headrest detachably provided in the headrest body. The auxiliary headrest includes a headrest bottom and a peripheral wall portion surrounding the headrest bottom, to jointly define an auxiliary accommodation space. Preferentially, the peripheral wall portion is formed by folding a soft sheet. The soft sheet may have an upper arcuate edge and a lower arcuate edge that face away from each other, and preferentially opposite connecting side edges that may be connected between the upper arcuate edge and the lower arcuate edge; in a folded state of the soft sheet, the upper arcuate edge and the lower arcuate edge may overlap with each other. The peripheral wall portion may be connected to the headrest bottom, in particular through the upper arcuate edge and the lower arcuate edge that may be overlapping with each other.

Based on a concept of the present disclosure, there is provided an auxiliary headrest for a child carrier, including: a headrest bottom and a peripheral wall portion surrounding the headrest bottom, to jointly define an auxiliary accommodation space; and a connector connected to a lower edge of the headrest bottom, the auxiliary headrest being attachable to the child carrier through the connector.

According to the above concept, the peripheral wall portion may be formed by folding a soft sheet, and preferentially the soft sheet has an upper arcuate edge and a lower arcuate edge that face away from each other, and opposite connecting side edges connected between the upper arcuate edge and the lower arcuate edge; preferentially, in a folded state of the soft sheet, the upper arcuate edge and the lower arcuate edge may overlap with each other. The peripheral wall portion may be connected to the headrest bottom through the upper arcuate edge and the lower arcuate edge that may be overlapping with each other.

According to the above concept, each of the connecting side edges may have a first arcuate portion and a second arcuate portion connected to each other, and, preferentially, in the folded state of the soft sheet, the first arcuate portion and the second arcuate portion may overlap with each other.

According to the above concept, the soft sheet is composed of a filler material and a fabric material, and the fabric material covers the filler material.

### BRIEF DESCRIPTION OF THE DRAWINGS

To further understand the features and technical contents of the present disclosure, please refer to the following detailed description of embodiments of the present disclosure and the accompanying drawings. The detailed description and accompanying drawings are provided for reference and illustration purposes only, and are not intended to limit the present disclosure, in which:
FIGS. 1A to 1D are schematic diagrams of an appearance of a child carrier having a retractable shielding structure according to an embodiment of the present disclosure from different viewing angles, in which the retractable shielding structure is in a deployed state;
FIGS. 2A to 2C are schematic diagrams of an appearance of a child carrier having a retractable shielding structure according to an embodiment of the present disclosure from different viewing angles, in which the retractable shielding structure is in a retracted state;
FIGS. 3A and 3B are schematic diagrams of an appearance of a child carrier having a retractable shielding structure according to an embodiment of the present disclosure;
FIGS. 4A and 4B are schematic diagrams of an appearance of a child carrier having a retractable shielding structure according to an embodiment of the present disclosure;
FIGS. 5A and 5B are schematic diagrams of an appearance of an auxiliary headrest according to an embodiment of the present disclosure;
FIG. 6 is a schematic diagram of an appearance of a conventional headrest;
FIG. 7 is a schematic diagram of an appearance of an auxiliary headrest according to an embodiment of the present disclosure;
FIG. 8 is a schematic diagram of an appearance of an auxiliary headrest according to an embodiment of the present disclosure;
FIG. 9 is a schematic diagram of an appearance of a child carrier having an auxiliary headrest according to an embodiment of the present disclosure;
FIG. 10 is a schematic diagram of an appearance of an auxiliary headrest according to an embodiment of the present disclosure.

### DETAILED DESCRIPTION

Technical concepts and connotations of the present disclosure will be described below with reference to the drawings and by way of exemplary embodiments. In the drawings or description, the same or similar parts are represented by the same or corresponding symbols. Furthermore, the drawings are drawn for the purpose of facilitating understanding, and dimensions and shapes of various components in the drawings are not actual dimensions or in proportional relationship.

In addition, the following description of the drawings and embodiments is not intended to limit the scope of implementation of the present disclosure to a single embodiment; other embodiments are also possible by replacing some or all of the components described or shown. In addition, in a situation where certain components of the disclosed embodiments may use some or all of the known components, only such known components that are necessary for understanding the embodiments of the present disclosure will be described, and detailed description of other parts of such known components is omitted to avoid confusion of the concepts and embodiments of the present disclosure.

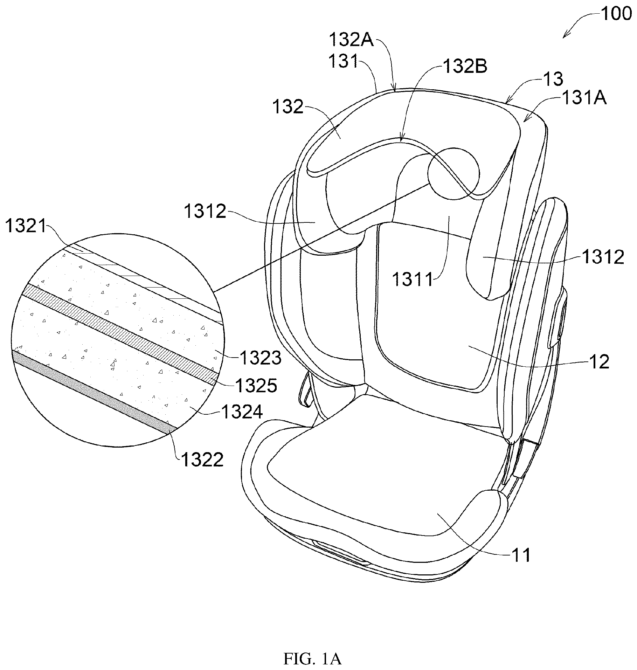

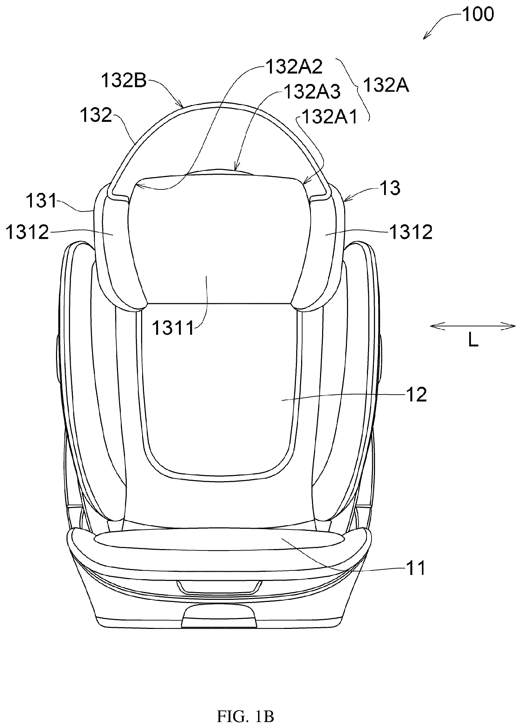

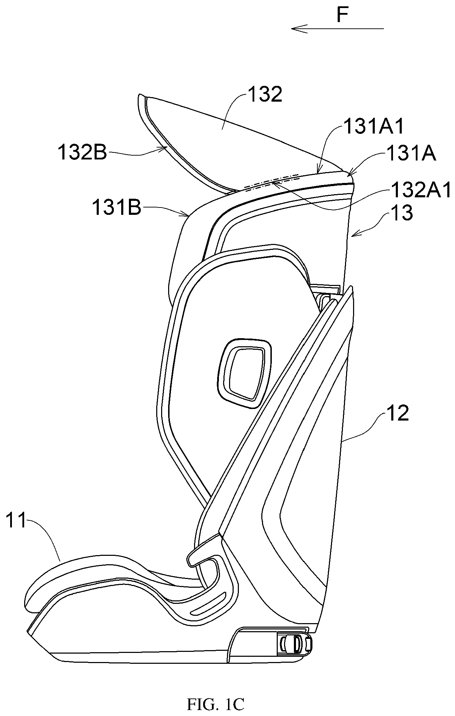

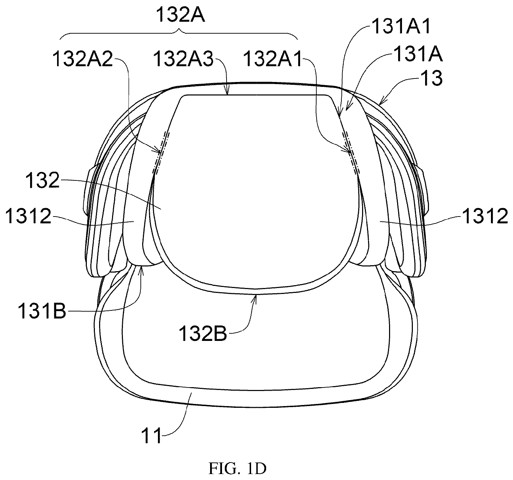

Referring to FIGS. 1A to 1D, they are schematic diagrams of an appearance of a child carrier 100 having a retractable shielding structure / shielding piece according to an embodiment of the present disclosure from different viewing angles when the shielding structure is in a deployed state. FIG. 1A is a schematic perspective view of the child carrier 100; FIG. 1B is a schematic front view of the child carrier 100; FIG. 1C is a schematic side view of the child carrier 100; and FIG. 1D is a schematic top view of the child carrier 100. The child carrier 100 of this embodiment includes a seating part 11, a backrest part 12, and a headrest part 13, and the backrest part 12 is connected to the seating part 11, thereby defining a seating space for a child or toddler to ride therein. The headrest part 13 is located in the backrest part 12, and has an accommodation space for accommodating head of the child or toddler, and may move up and down relative to the backrest part 12 to adjust a height of the headrest part 13 according to a body shape of the child or toddler.

In this embodiment, the headrest part 13 includes a headrest body 131 and a shielding piece 132 (shielding structure). The headrest body 131 is generally composed of a support member, a buffer pad, and a surface fabric. The headrest body 131 is connected to the backrest part 12 through the support member and may move up and down relative to the backrest part 12 through the support member. The buffer pad may absorb impact on the child or toddler caused by an environmental change (such as carrier vibration), and the surface fabric is made of a soft or skin-friendly material to provide a comfortable feeling for the child or toddler riding in the child carrier 100. The headrest body 131 includes a headrest portion 1311, and two lateral portions 1312 connected to both sides of the headrest portion 1311 and extending forwards (i.e., in a direction of line of sight of the child or toddler when riding in the child carrier 100, as indicated by arrow F in FIG. 1C). The headrest portion 1311 and the two lateral portions 1312 together define the accommodation space of the headrest part 13 to accommodate the head of the child or toddler. When the child or toddler rides in the child carrier 100 and rests head against the headrest portion 1311 of the headrest body 131, the headrest portion 1311 provides support for the head, and the lateral portions 1312 may restrict the head of the child or toddler from moving in a transverse direction of the child carrier 100 (i.e., in a left-right direction when the child or toddler rides in the child carrier 100, as indicated by a double-headed arrow L in FIG. 1B), thereby avoiding shaking of the head of the child or toddler.

The shielding piece 132 is connected to a portion of an upper edge 131A of the headrest body 131 through connecting portions 132A1 and 132A2 of an upper peripheral edge 132A of the shielding piece, so as to at least partially shield the headrest part 13, i.e., it may shield the accommodation space of the headrest part 13 to shield the head of the child or toddler from sunlight or ambient light. In detail, in this embodiment, the shielding piece 132 is composed of an outer fabric material 1321, an inner fabric material 1322, and a filler material encapsulated between the outer fabric material 1321 and the inner fabric material 1322. As shown in a partial cross-sectional view of FIG. 1A, the shielding piece 132 of this embodiment is formed by encapsulating the filler material between the skin-friendly outer fabric material 1321 and inner fabric material 1322. The filler material may be a stacked multi-layer structure, which includes, for example, but is not limited to: an upper foam layer 1323, a lower foam layer 1324, and a polyethylene (PE) sheet layer 1325 sandwiched therebetween. In other embodiments, the filler material may be a stacked multi-layer structure including, for example, but not limited to, at least one foam layer and at least one polyethylene sheet layer bonded to the foam layer. In this embodiment, the PE sheet layer 1325 has a certain degree of hardness to provide support for the shielding piece 132, so that in the deployed state, the shielding piece 132 may not only be connected to the portion of the upper edge 131A of the headrest body 131 with its connecting portions 132A1 and 132A2, but also maintain a certain degree of rigidity through the hardness of the PE sheet layer 1325, to allow a lower peripheral edge 132B of the shielding piece 132 to be supported and kept away from the headrest body 131, thereby shielding the accommodation space of the headrest part 13.

Referring to FIGS. 1B and 1C, in this embodiment, the upper peripheral edge 132A of the shielding piece 132 includes connecting portions 132A1 and 132A2, which are located on both sides of the upper peripheral edge 132A and have an intermediate section 132A3 therebetween. In other words, the two connecting portions 132A1 and 132A2 of the upper peripheral edge 132A of the shielding piece 132 are not continuously connected to each other. The shielding piece 132 is connected to a corresponding portion of the upper edge 131A of the headrest body 131 through the two connecting portions 132A1 and 132A2 of its upper peripheral edge 132A, while the intermediate section 132A3 remains unconnected to the headrest body 131. In this embodiment, the connecting portions 132A1 and 132A2 of the shielding piece 132 are arranged to correspond to two lateral connection areas 131A1 (only one of which is shown in FIG. 1C due to the angle of view) that present relatively straight contours in the upper edge 131A of the headrest body 131; that is, the shielding piece 132 and the headrest body 131 are connected to each other in a substantially linear manner. Thus, in the deployed state, the shielding piece 132 may maintain a predetermined height due to the hardness of the PE sheet in the filler material, so that the lower peripheral edge 132B does not contact the headrest body 131, and the lower peripheral edge 132B of the shielding piece 132 exhibits a shape with an arcuate opening facing the seating part 11 of the child carrier 100 when viewed from a direction facing the child carrier 100. That is, in the deployed state, the shielding piece 132 is connected to the connection areas 131A1 and 131A2 of the headrest body 131 through the connecting portions 132A1 and 132A2 of its upper peripheral edge 132A, and its lower peripheral edge 132B is far away from the headrest body 131, so that the shielding piece 132 may expand and be supported to maintain an angle with the headrest body 131; at the same time, two sides of the shielding piece 132 are bent towards the seating part 11, and its inner surface (a surface formed by the inner fabric material 1322) forms an arcuate surface facing the seating part 11.

As described above, the two lateral portions 1312 of the headrest body 131 are connected to the headrest portion 1311 and jointly define the accommodation space of the headrest part 13. In this embodiment, each lateral portion 1312 of the headrest body 131 has an arcuate side edge 131B that is connected to the upper edge 131A of the headrest body 131; the upper edge 131A of the headrest body 131 has linear segments presenting relatively straight contours, which are the connection areas 131A1, 131A2 connected to the shielding piece 132. In this embodiment, the connecting portions 132A1 and 132A2 of the shielding piece 132 correspond to the two lateral connection areas 131A1 of the upper edge 131A of the headrest body 131 that present relatively straight contours, but do not extend to two opposite arcuate side edges 131B of the headrest body 131, so that the shielding piece 132 does not excessively bend towards the seating part 11, which may otherwise affect the line of sight of the child or toddler riding in the child carrier 100.

In this embodiment, the shielding piece 132 may be connected to the portion of the upper edge 131A of the headrest body 131 for example by sewing, but the present disclosure is not limited to this connection method; in other embodiments, other connection methods are also feasible, such as thermo-compression bonding, adhesive bonding, etc. For example, a surface fabric (such as the outer fabric material 1321 and the inner fabric material 1322) of the shielding piece 132 may be connected to the surface fabric of the headrest body 131 by sewing, so that the shielding piece 132 is fixed to the portion of the upper edge 131A of the headrest body 131 with its connecting portions 132A1, 132A2.

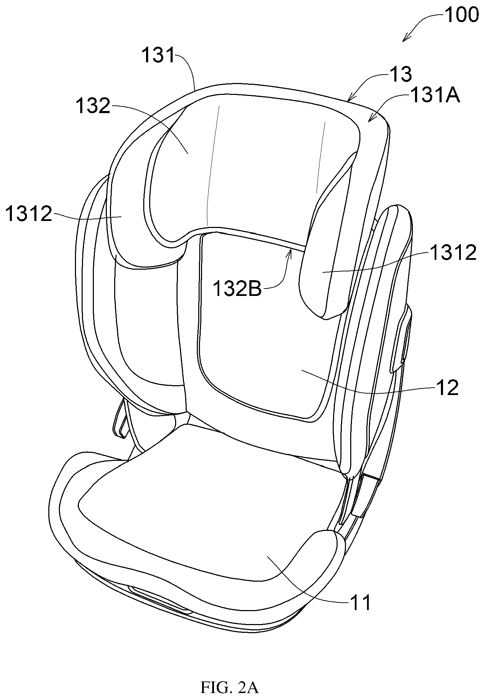

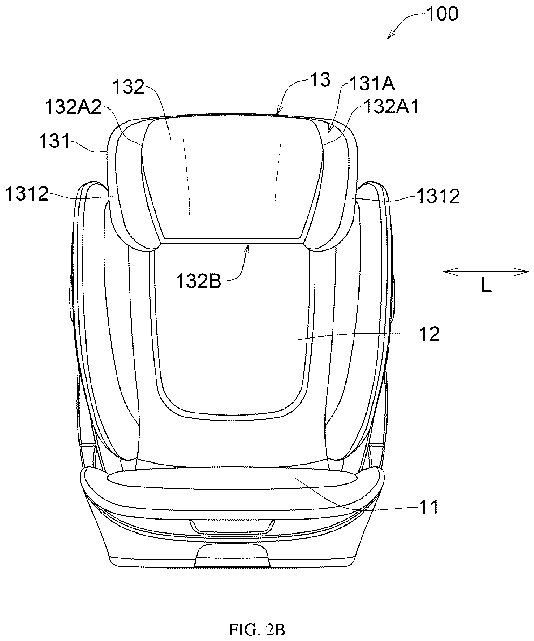

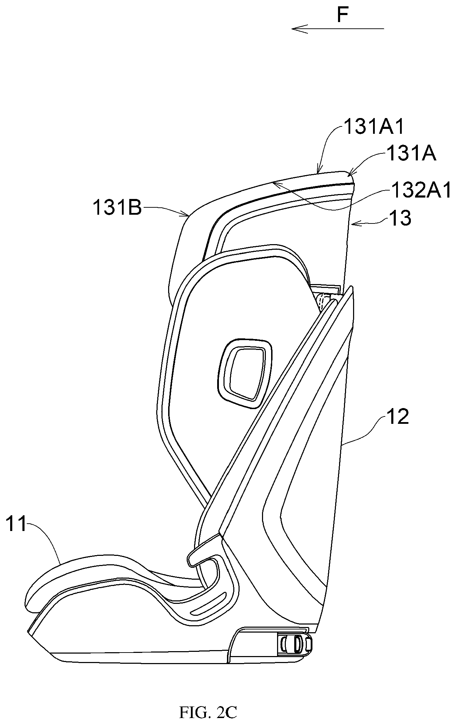

Referring to FIGS. 2A to 2C, they are schematic diagrams of an appearance of a child carrier 100 having a retractable shielding structure according to an embodiment of the present disclosure from different viewing angles when the shielding structure is in a retracted state. FIG. 2A is a schematic perspective view of the child carrier 100; FIG. 2B is a schematic front view of the child carrier 100; and FIG. 2C is a schematic side view of the child carrier 100.

In this embodiment, since the shielding piece 132 has a filler material structure including the upper foam layer 1323, the lower foam layer 1324, and the PE sheet layer 1325 sandwiched therebetween, this material structure endows the shielding piece 132 with certain support strength and bendable tenacity, so when the shielding piece 132 is not needed, a user (such as a caregiver of the child or toddler) may press the shielding piece 132 towards the headrest body 1311, allowing the shielding piece 132 to be bent into the accommodation space of the headrest part 13 and accommodated therein, forming the retracted state. As shown in FIGS. 2A to 2C, when in the retracted state, an outer surface of the shielding piece 132 (a surface formed by the outer fabric material 1321) forms an arcuate surface with an arcuate opening facing outwards in the accommodation space of the headrest part 13, and the shielding piece 132 as a whole conforms to the headrest portion 1311 and two lateral portions 1312 of the headrest body 131, for the head of the child or toddler to rest against it. As described above, the shielding piece 132 of this embodiment is composed of the skin-friendly and soft outer layer fabric material 1321 and inner fabric material 1322, as well as the filler material encapsulated therebetween, so when the shielding piece 132 is accommodated in the accommodation space of the headrest part 13 and conforms to the headrest portion 1311 and the two lateral portions 1312 of the headrest body 131, the shielding piece may also provide comfort and a buffer and shock-absorbing effect for the child or toddler riding in the child carrier 100, which may facilitate storage and improve safety at the same time. In addition to the foam layer, ethylene-vinyl acetate (EVA) copolymer foam material may also be used as the filler material, whose porous nature is more conducive to improving the bendability of the shielding piece 132, so that the shielding piece 132 in the retracted state may more closely conform to the headrest portion 1311 and both lateral portions 1312 of the headrest body 131.

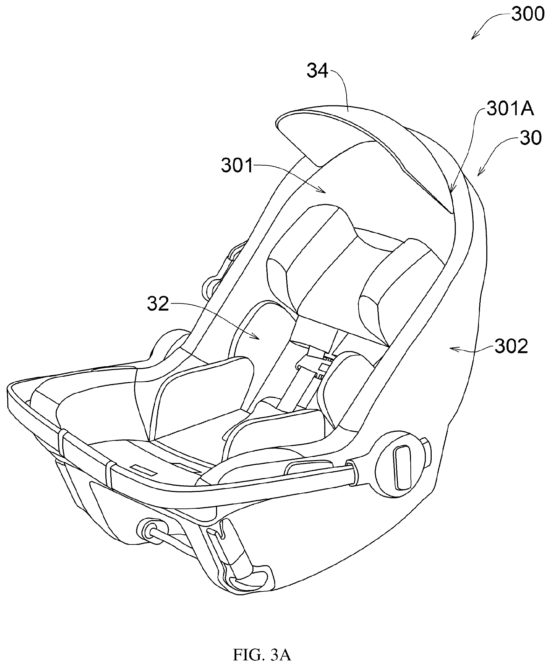

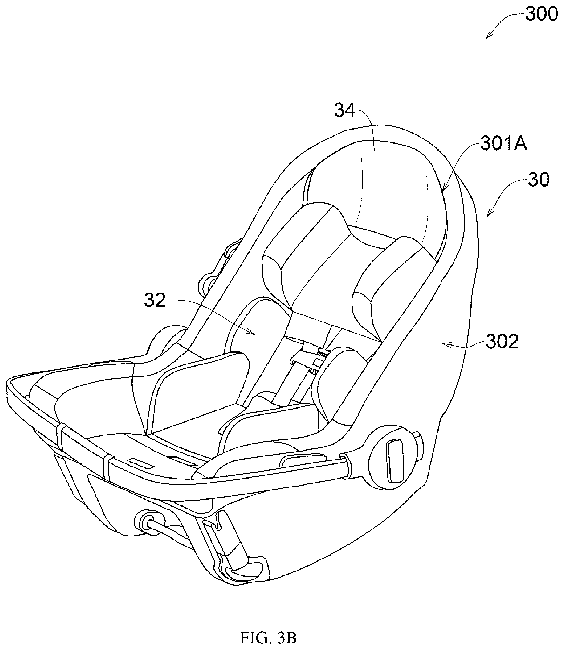

Referring to FIG. 3A and FIG. 3B, they are schematic diagrams of an appearance of a child carrier 300 with a retractable shielding structure according to an embodiment of the present disclosure. The child carrier 300 of this embodiment is a baby basket, including a basket body 30 and a seat cushion assembly 32 accommodated in the basket body 30. In this embodiment, the baby carrier 300 includes a shielding piece 34 (shielding structure) connected to a portion of a peripheral edge of the basket body 30. The shielding piece 34 has a structure and composition similar to the aforementioned shielding piece 132, i.e., it is also made of filler material and fabric material and may be, in a retracted state, accommodated inside the basket body.

In detail, in this embodiment, the basket body 30 has an inner surface 301 and an outer surface 302, and the shielding piece 34 (shielding structure) is connected to a portion of an upper edge 301A of the inner surface 301 near the head position. Since the shielding piece 34 is formed in such a way that a filler material having a multi-layer stacked structure is wrapped in a fabric material, and the filler material includes a porous material (such as a foam layer or an EVA layer) and a PE sheet layer with a certain strength, in a deployed state, the shielding piece 34 has a certain strength and may be held up to a certain height, thereby partially shielding an accommodation space defined by the basket body 30, as shown in FIG. 3A. In addition, due to a certain degree of strength and bendability of the shielding piece 34, when the shielding piece 34 is not needed, the user (such as the caregiver of the child or toddler) may press the shielding piece 34 into the basket body 30, allowing the shielding piece 34 to be bent into the accommodation space of the basket body 30 and accommodated therein, forming the retracted state, as shown in FIG. 3B. When in the retracted state, an outer surface of the shielding piece 34 (a surface formed by the outer fabric material) forms an arcuate surface with an arcuate opening facing outside of the basket in the accommodation space of the basket body 30, and the shielding piece 34 as a whole conforms to the inner surface 301 of the basket body 30 near the head position, which may facilitate storage and may also provide further protection when an infant lies in the basket body 30, avoiding the infant from directly touching the inner surface 301 of the basket body 30.

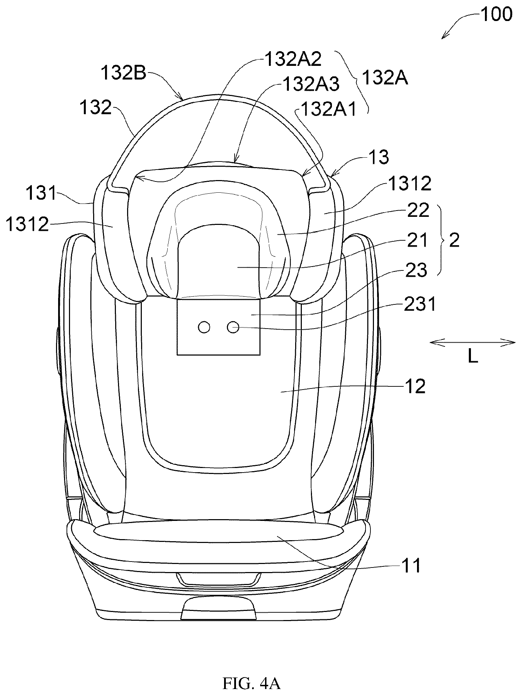

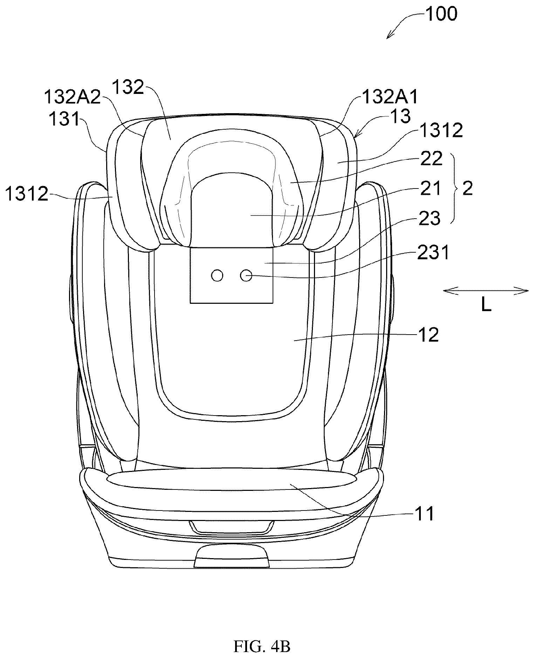

Referring to FIG. 4A and FIG. 4B, they are schematic diagrams of an appearance of a child carrier 400 with a retractable shielding structure according to an embodiment of the present disclosure. FIG. 4A shows a schematic diagram of an appearance of the child carrier 400 when its shielding structure is in a deployed state, while FIG. 4B shows a schematic diagram of an appearance of the child carrier 400 when its shielding structure is in a retracted state. The child carrier 400 has a structure and composition similar to the aforementioned child carrier 100, including the seating part 11, the backrest part 12, the headrest part 13, the headrest body 131, the shielding piece 132 and so on. The difference between this embodiment and the previous embodiments is that in this embodiment, the child carrier 400 further includes an auxiliary headrest 2, which is detachably provided in the headrest body 131 and may further provide stable head support and protection for small children or young toddlers.

In this embodiment, the auxiliary headrest 2 includes a headrest bottom 21, a peripheral wall portion 22 surrounding the headrest bottom 21, and a connector 23 connected to a lower edge of the headrest bottom 21. The headrest bottom 21 and the peripheral wall portion 22 jointly define an auxiliary accommodation space. The auxiliary headrest 2 may be attached to the child carrier 100 through the connector 23, e.g., attached to the backrest part 12 of the child carrier 100. In this embodiment, the connector 23 is provided with a connection element 231 to enable the auxiliary headrest 2 to be detachably connected to the backrest part 12 of the child carrier 100. For instance, the connection element 231 may include, for example, but not limited to, a snap fastener, a magnetic buckle, and a hook-and-loop fastener, as long as it is sufficient to attach the auxiliary headrest 2 to the child carrier 100. In addition, in this embodiment, the headrest bottom 21 and the peripheral wall portion 22 of the auxiliary headrest 2 are covered with a breathable and skin-friendly fabric or mesh to provide a breathable and comfortable feeling for the child or toddler.

Similarly, in this embodiment, the shielding piece 132 may also be deployed to provide a shielding function when in use (as shown in FIG. 4A), or retracted in the accommodation space of the headrest part 13 when not in use (as shown in FIG. 4B). In detail, as shown in FIG. 4B, when the shielding piece 132 is not needed, the user (such as the caregiver of the child or toddler) may press the shielding piece 132 towards the headrest portion 1311 of the headrest body 131 before installing the auxiliary headrest 2, so that the shielding piece 132 may be bent into the accommodation space of the headrest part 13 and accommodated therein, forming the retracted state. Similarly, when in the retracted state, an outer surface of the shielding piece 132 (a surface formed by the outer fabric material 1321) forms an arcuate surface with an arcuate opening facing outwards in the accommodation space of the headrest part 13, and the shielding piece 132 as a whole conforms to the headrest portion 1311 and two lateral portions 1312 of the headrest body 131. When the shielding piece 132 fully conforms to the headrest body 131, the auxiliary headrest 2 may be disposed on the arcuate surface formed by the outer surface of the shielding piece 132, and also be attached to the child carrier 400 through the connector 23, for the head of the child or toddler to rest against it.

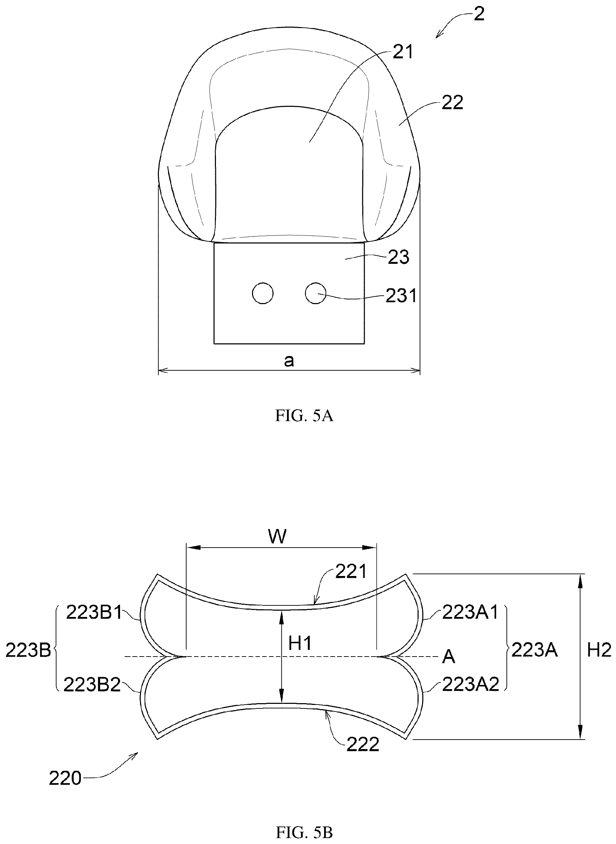

Referring to FIGS. 5A to 5B, they are schematic diagrams of an appearance of an auxiliary headrest 2 according to an embodiment of the present disclosure. The auxiliary headrest 2 of this embodiment includes a headrest bottom 21 and a peripheral wall portion 22 surrounding the headrest bottom 21, which together define an auxiliary accommodation space. The auxiliary headrest 2 also includes a connector 23 connected to a lower edge of the headrest bottom 21, and the connector 23 may be made of a soft sheet material. The connector 23 may be provided with a connection element 231 such as a snap fastener, a magnetic buckle, and a hook-and-loop fastener, so that the auxiliary headrest 2 may be attached to the child carrier through the connector 23. As shown in FIG. 5B, in this embodiment, the peripheral wall portion 22 is formed by folding a soft sheet 220, and the soft sheet has upper and lower arcuate edges 221, 222 that face away from each other, as well as opposite connecting side edges 223A, 223B connected between the upper arcuate edges 221 and the lower arcuate edge 222. In a folded state of the soft sheet 220, the upper arcuate edges 221 and the lower arcuate edge 222 overlap with each other, and the peripheral wall portion 22 is connected to the headrest bottom (i.e., the headrest bottom 21 shown in FIG. 5A) through the overlapping upper and lower arcuate edges 221, 222.

In detail, in this embodiment, the soft sheet 220 has a symmetrical contour with a fold line A as an axis of symmetry, and includes the upper arcuate edge 221 and the lower arcuate edge 222 opposite to the upper arcuate edge 221 (their arcuate openings facing opposite directions), so that a distance H1 between vertices of the upper arcuate edge 221 and the lower arcuate edge 222 is smaller than a distance H2 between left sides of the upper arcuate edge 221 and the lower arcuate edge 222 or between right sides of the upper arcuate edge 221 and the lower arcuate edge 222. The upper and lower arcuate edges 221 and 222 of the soft sheet 220 have arcuate side edges 223A, 223B connected therebetween. The arcuate side edge 223A is formed by a first arcuate portion 223A1 and a second arcuate portion 223A2 that are symmetrical to each other with respect to the fold line A; and the arcuate side edge 223B is formed by a first arcuate portion 223B1 and a second arcuate portion 223B2 that are symmetrical to each other with respect to the fold line A. The first arcuate portion 223A1 and the second arcuate portion 223A2 of the arcuate side edge 223A, as well as the first arcuate portion 223B1 and the second arcuate portion 223B2 of the arcuate side edge 223B, converge towards the fold line A, so that the soft sheet 220 has a minimum width W at the fold line A. As described above, in this embodiment, by folding the soft sheet 220 along the fold line A, the upper and lower arcuate edges 221, 222 of the soft sheet 220 overlap with each other, and the peripheral wall portion 22 is connected to the headrest bottom by the overlapping upper and lower arcuate edges 221, 222; an upper edge of the auxiliary headrest 2 is formed at the fold line A. Due to the minimum width W of the soft sheet 220 at its fold line A, it not only helps to maintain a fixed configuration of the auxiliary headrest 2 after being shaped, but also keeps the peripheral wall portion 22 flat and upright through tension generated by the folding of the sheet.

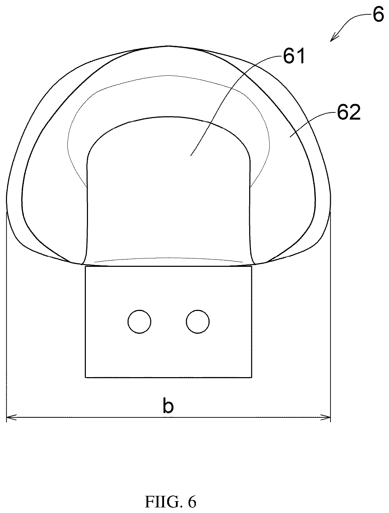

In addition, in this embodiment, since the peripheral wall portion 22 of the auxiliary headrest 2 is formed by folding the soft sheet 220 along the fold line A, and the two arcuate side edges 223A and 223B of the soft sheet 220 are each designed to be composed of two symmetrically arranged arcuate portions 223A1, 223A2, and 223B1, 223B2, compared to a conventional headrest 6 shown in FIG. 6, which is formed by folding and connecting two soft sheets to form a peripheral wall portion 62, the auxiliary headrest 2 of this embodiment may maintain a fixed and upright configuration of the peripheral wall portion 22 through the tension and support of the soft sheet 220 per se. Moreover, in a case where the headrest bottom 21 has a same size as a headrest bottom 61, an overall width a of the peripheral wall portion 22 of the auxiliary headrest 2 of this embodiment is smaller than a width b of the peripheral wall portion 62 of the conventional headrest 6, thereby improving the degree of wrapping and comfort of the auxiliary headrest 2. In this embodiment, the upper arcuate edge 221 and the lower arcuate edge 222 of the soft sheet 220 overlap and are connected to a peripheral edge of the headrest bottom 21, which may further ensure that the peripheral wall portion 22 keeps its surface smooth and wrinkleless when connected to the headrest bottom 21, and avoid accumulation of dirt in wrinkles and affecting the appearance.

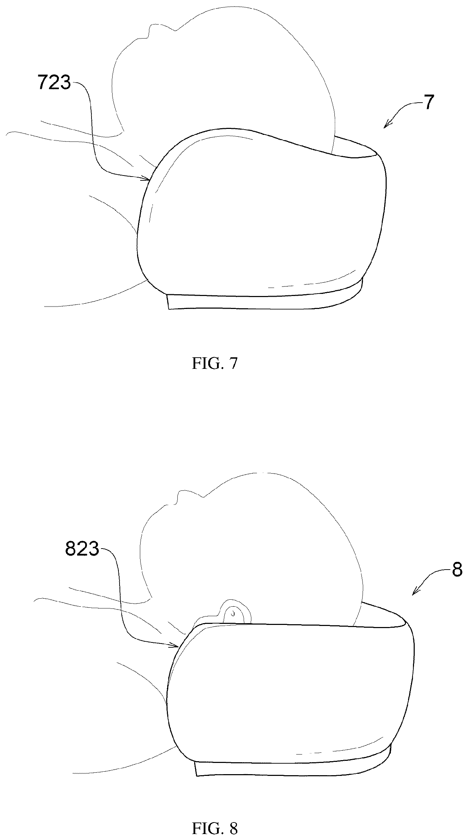

Referring to FIG. 7 and FIG. 8, they illustrate different variations of the auxiliary headrest according to the present disclosure. In the present disclosure, the shape of the arcuate portions of the connecting side edges of the aforementioned soft sheet may be adjusted according to actual needs to form different degrees of wrapping of the auxiliary headrest. For example, as shown in FIGS. 7 and 8, when a connecting side edge 723 has a larger curvature than a connecting side edge 823, an auxiliary headrest 7 in FIG. 7 will have a higher degree of wrapping than an auxiliary headrest 8 in FIG. 8, and may even completely cover ears of the child or toddler.

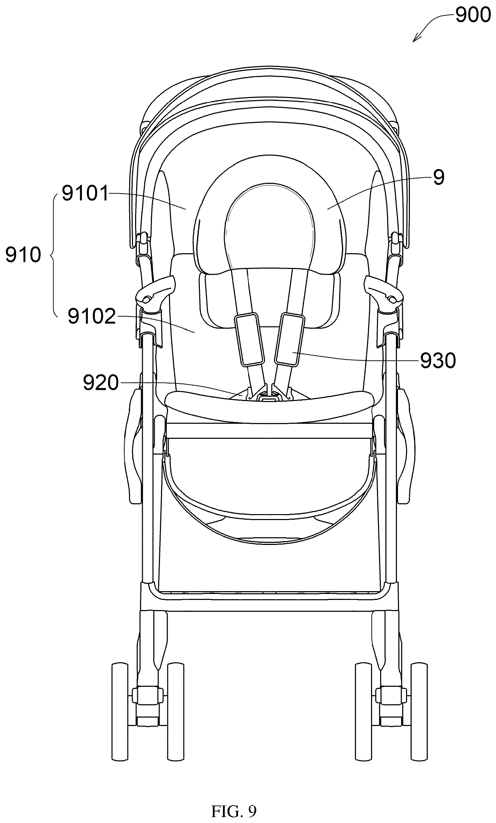

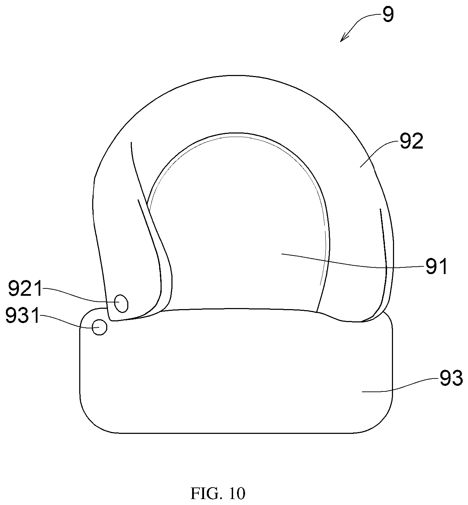

The auxiliary headrest of the present disclosure may be provided in various types of child carriers according to actual needs, including but not limited to: child safety seats, baby baskets, child strollers, etc. Referring to FIGS. 9 and 10, a child stroller is taken as an example to illustrate a schematic diagram of an appearance of a child carrier 900 having an auxiliary headrest 9 and a schematic diagram of an appearance of the auxiliary headrest 9 according to an embodiment of the present disclosure.

In this embodiment, the child carrier 900 is a child stroller, which basically includes a backrest part 910, a seating part 920, and a safety belt 930 disposed on the backrest part 910. The backrest part 910 and the seating part 920 are connected to each other and define an accommodation space to accommodate the child or toddler. Generally, the backrest part 910 of the child stroller may be moved up or down to adjust a degree of elevation of the backrest part 910, allowing the child or toddler to lie down or sit up in the accommodation space. The backrest part 910 includes a head contact surface 9101 and a back contact surface 9102. The head contact surface 9101 is used to contact and support the head of the child or toddler, while the back contact surface 9102 is used to support the back of the child or toddler. The safety belt 930 is used to restrain and restrict the child or toddler riding in the stroller, positioning the child or toddler therein and protecting the child or toddler.

In this embodiment, the child stroller further includes an auxiliary headrest 9, which is detachably attached to the backrest part 910 of the child stroller through its connector 93, and is further fixed to the child stroller through the safety belt 930.

As shown in FIG. 10, it illustrates a detailed design of the auxiliary headrest 9 that is applicable to the child stroller. The auxiliary headrest 9 of this embodiment has a structure and composition similar to the auxiliary headrest 2, and includes a headrest bottom 91, a peripheral wall portion 92, and a connector 93. The peripheral wall portion 92 of the auxiliary headrest 9 is also formed by folding a soft sheet, and is connected to a peripheral edge of the headrest bottom 91 through overlapping of the upper and lower arcuate edges of the soft sheet, so that it may be better ensured that the peripheral wall portion 92 maintains a smooth and wrinkleless surface when connected to the headrest bottom 91, to avoid dirt accumulation at wrinkles or affecting the appearance, and the peripheral wall portion 92 keeps upright and supported by its own tension, so as to provide sufficient support and protection.

The difference from the previous embodiments is that in the auxiliary headrest 9 of this embodiment, the peripheral wall portion 92 and the connector 93 are provided with corresponding connection elements 921 and 931, respectively. The connection elements 921 and 931 include, but are not limited to, snap fasteners in pair, magnetic buckles in pair, and hook-and-loop fasteners in pair. The connection elements 921 and 931 may be fastened or bonded to each other, and a gap may be formed between a lower edge of the peripheral wall portion 92 and the connector 93. In this embodiment, the safety belt 930 of the child stroller may extend through the gap between the lower edge of the peripheral wall 92 and the connector 93, and then be fastened to a fastening position of a safety belt system, thereby positioning the auxiliary headrest 9 on the head contact surface 9101 of the child stroller. In other words, in this embodiment, the auxiliary headrest 9 is installed in the child stroller by passing through the safety belt 930.

Alternatively, in other embodiments, similar to the connection element 23 of the auxiliary headrest 2, the connector 93 may be provided with the connection element 231, to allow the auxiliary headrest 9 to be directly attached to the child stroller through the connector 93.

It should be noted that although the present disclosure enumerates the child safety seat, the baby basket, or the child stroller to illustrate the concepts of the present disclosure, the present disclosure is not limited to these specific embodiments. Those with ordinary knowledge in the art should be able to apply the retractable shielding structure and the auxiliary headrest of the present disclosure to various child carriers based on the teachings of the present disclosure, without departing from the scope of the present disclosure.

As described above, the present disclosure provides the retractable shielding structure that may provide the shielding function for the child carrier without need for additional hardware or accessories, to shield external light for the child or toddler riding in it and enhance user experience; at the same time, it may be easily retracted and integrated with the child carrier when not in use, which facilitates storage; moreover, the material of the shielding structure may also provide a comfortable feeling for the child or toddler riding in the child carrier. The present disclosure also provides the auxiliary headrest that is compatible with various types of child carriers and may further provide stable support and safety for the child or toddler.

It should be noted that all parameters, dimensions, materials, and constructions described in the present disclosure are exemplary and their actual parameters, dimensions, materials, and/or constructions depend on specific applications or usages of the teachings of the present disclosure. It should be understood that the aforementioned embodiments are mainly presented by way of exemplary illustration, and within the scope of the appended claims and their equivalents, the concepts and embodiments of the present disclosure may be implemented in ways different from those specifically described and claimed for protection. The embodiments of the present disclosure involve each of individual features, components, products, materials, assemblies, and/or methods mentioned above.

In addition, if such features, components, products, materials, assemblies, and/or methods are not inconsistent with each other, any combination of two or more such features, components, products, materials, assemblies, and/or methods is included within the scope of the present disclosure. Other substitutions, modifications, changes, and omissions may be made to the design, operating condition, and configuration structure of the corresponding components of the above embodiments without departing from the scope of the present disclosure. The use of numerical ranges does not exclude equivalents that fall outside the range but satisfy the same function in the same way, in order to produce the same result.

### LIST OF REFERENCES

- 100, 300, 400, 900: child carrier
- 11: seating part
- 12: backrest part
- 13: headrest part
- 131: headrest body
- 131: An upper edge
- 131A1: connection area
- 131A2: connection area
- 131B: arcuate side edge
- 1311: headrest portion
- 1312: lateral portion
- 132: shielding piece / shielding structure
- 132A: upper peripheral edge
- 132A1: connecting portion
- 132A2: connecting portion
- 132A3: intermediate section
- 132B: lower peripheral edge
- 1321: outer fabric material
- 1322: inner fabric material
- 1323: upper foam layer
- 1324: lower foam layer
- 1325: polyethylene (PE) sheet layer
- 2: auxiliary headrest
- 21: headrest bottom
- 22: peripheral wall portion
- 220: soft sheet
- 221: upper arcuate edge
- 222: lower arcuate edge
- 223: connecting side edge
- 223A1: first arcuate portion
- 223A2: second arcuate portion
- 223B: connecting side edge
- 223B1: first arcuate portion
- 223B2: second arcuate portion
- 23: connector
- 231: connection element
- 30: basket body
- 301: inner surface
- 301A: upper edge
- 302: outer surface
- 32: seat cushion assembly
- 34: shielding piece / shielding structure
- 6: headrest
- 61: headrest bottom
- 62: peripheral wall portion
- 7: auxiliary headrest
- 723: connecting side edge
- 8: auxiliary headrest
- 823: connecting side edge
- 9: auxiliary headrest
- 91: headrest bottom
- 92: peripheral wall portion
- 921: connection element
- 93: connector
- 931: connection element
- 910: backrest part
- 9101: head contact surface
- 9102: back contact surface
- 920: seating part
- 930: safety belt
- A: fold line
- W: width
- H1: height
- H2: height
- a: width
- b: width

## Claims

1. A child carrier (100, 300, 400, 900), comprising a seating part (11), a backrest part (12, 910) connected to the seating part (11), and a headrest part (13) disposed in the backrest part (12, 910), wherein:
the headrest part (13) comprises a headrest body (131) and a shielding piece (132), the headrest body (131) having an accommodation space, and the shielding piece (132) being connected to a portion of an upper edge (131A) of the headrest body (131), to at least partially shield the headrest part (13) in a deployed state, and to be accommodated in the accommodation space of the headrest part (13) in a retracted state; and wherein
the shielding piece (132) is composed of a filler material and a fabric material, and the fabric material covers the filler material.

2. The child carrier (100, 300, 400, 900) according to claim 1, wherein the filler material comprises a stacked multi-layer structure.

3. The child carrier (100, 300, 400, 900) according to claim 1, wherein the headrest body (131) has a headrest portion (1311) and opposite two lateral portions (1312), the two lateral portions (1312) being connected to the headrest portion (1311) and jointly defining the accommodation space, wherein:
each lateral portion (1312) has an arcuate side edge (131B) connected to the upper edge (131A) of the headrest body (131);
the upper edge (131A) of the headrest body (131) has a linear segment connected to the arcuate side edge (131B); and
the shielding piece (132) is connected to the linear segment.

4. The child carrier (100, 300, 400, 900) according to claim 1, wherein the headrest body (131) has a headrest portion (1311) and opposite two lateral portions (1312), the two lateral portions (1312) being connected to the headrest portion (1311) and jointly defining the accommodation space,
wherein the shielding piece (132) is accommodated in the accommodation space of the headrest part (13) and conforms to the headrest portion (1311) and the two lateral portions (1312) of the headrest body (131).

5. The child carrier (100, 300, 400, 900) according to claim 1, wherein:
the child carrier (100, 300, 400, 900) further comprises an auxiliary headrest (2, 7, 8, 9) detachably provided to the headrest body (131);
the auxiliary headrest (2, 7, 8, 9) comprises a headrest bottom (21, 61, 91) and a peripheral wall portion (22, 62, 92) surrounding the headrest bottom (21, 61, 91), to jointly define an auxiliary accommodation space;
the peripheral wall portion (22, 62, 92) is formed by folding a soft sheet (220); and in particular wherein the soft sheet (220) has an upper arcuate edge (221) and a lower arcuate edge (222) that face away from each other, and opposite connecting side edges (223A, 223B, 723, 823) connected between the upper arcuate edge (221) and the lower arcuate edge (222); in a folded state of the soft sheet (220), the upper arcuate edge (221) and the lower arcuate edge (222) overlap with each other, and the peripheral wall portion (22, 62, 92) is connected to the headrest bottom (21, 61, 91) through the upper arcuate edge (221) and the lower arcuate edge (222) overlapping with each other.

6. The child carrier (100, 300, 400, 900) according to claim 5, wherein the soft sheet (220) has a symmetrical contour with a fold line (A) as an axis of symmetry, the soft sheet (220) has a minimum width (W) at the fold line (A), and an upper edge of the auxiliary headrest (2) is formed at the fold line (A).

7. A baby basket, comprising a basket body (30) and a seat cushion assembly (32) accommodated in the basket body (30), wherein:
the baby basket comprises a shielding piece (34) connected to a portion of a peripheral edge of the basket body (30), the shielding piece (34) is composed of a filler material and a fabric material, and the shielding piece (34) in a retracted state is accommodated in the basket body (30).

8. The baby basket according to claim 7, wherein the filler material comprises a stacked multi-layer structure.

9. The baby basket according to claim 7, wherein:
the baby basket further comprises an auxiliary headrest (2, 7, 8, 9) detachably provided in the headrest body (131);
the auxiliary headrest (2, 7, 8, 9) comprises a headrest bottom (21, 61, 91) and a peripheral wall portion (22, 62, 92) surrounding the headrest bottom (21, 61, 91), to jointly define an auxiliary accommodation space;
the peripheral wall portion (22, 62, 92) is formed by folding a soft sheet (220); and in particular wherein the soft sheet (220) has an upper arcuate edge (221) and a lower arcuate edge (222) that face away from each other, and opposite connecting side edges (223A, 223B, 723, 823) connected between the upper arcuate edge (221) and the lower arcuate edge (222); in a folded state of the soft sheet (220), the upper arcuate edge (221) and the lower arcuate edge (222) overlap with each other, and the peripheral wall portion (22, 62, 92) is connected to the headrest bottom (21, 61, 91) through the upper arcuate edge (221) and the lower arcuate edge (222) overlapping with each other.

10. The baby basket according to claim 9, wherein the soft sheet (220) has a symmetrical contour with a fold line (A) as an axis of symmetry, the soft sheet (220) has a minimum width (W) at the fold line (A), and an upper edge of the auxiliary headrest (2) is formed at the fold line (A).

11. The baby basket according to claim 7, wherein when in the retracted state, the shielding piece (34) as a whole conforms to an inner surface (301) of the basket body (30) near a head position.

12. An auxiliary headrest (2, 7, 8, 9) for a child carrier (100, 300, 400, 900), comprising:
a headrest bottom (21, 61, 91) and a peripheral wall portion (22, 62, 92) surrounding the headrest bottom (21, 61, 91), to jointly define an auxiliary accommodation space; and
a connector (23, 93) connected to a lower edge of the headrest bottom (21, 61, 91), the auxiliary headrest (2, 7, 8, 9) being attachable to the child carrier (100, 300, 400, 900) through the connector (23, 93),
wherein the peripheral wall portion (22, 62, 92) is formed by folding a soft sheet (220), and the soft sheet (220) has an upper arcuate edge (221) and a lower arcuate edge (222) that face away from each other, and opposite connecting side edges (223A, 223B, 723, 823) connected between the upper arcuate edge (221) and the lower arcuate edge (222); in a folded state of the soft sheet (220), the upper arcuate edge (221) and the lower arcuate edge (222) overlap with each other, and the peripheral wall portion (22, 62, 92) is connected to the headrest bottom (21, 61, 91) through the upper arcuate edge (221) and the lower arcuate edge (222) overlapping with each other.

13. The auxiliary headrest (2, 7, 8, 9) according to claim 12, wherein:
each of the connecting side edges (223A, 223B, 723, 823) has a first arcuate portion (223A1, 223B1) and a second arcuate portion (223A2, 223B2) connected to each other, and in the folded state of the soft sheet (220), the first arcuate portion (223A1, 223B1) and the second arcuate portion (223A2, 223B2) overlap with each other.

14. The auxiliary headrest (2, 7, 8, 9) according to claim 12, wherein the soft sheet (220) has a symmetrical contour with a fold line (A) as an axis of symmetry, the soft sheet (220) has a minimum width (W) at the fold line (A), and an upper edge of the auxiliary headrest (2) is formed at the fold line (A).

15. The auxiliary headrest (2, 7, 8, 9) according to claim 12, wherein the soft sheet (220) is composed of a filler material and a fabric material, and the fabric material covers the filler material.
